# EUROPÄISCHE PATENTSCHRIFT

(11) **EP 3 134 876 B1**
(45) Veröffentlichungstag und Bekanntmachung des Hinweises auf die Patenterteilung: **07.06.2023**
(21) Anmeldenummer: 15720644.2
(22) Anmeldetag: 23.04.2015
(51) Int. Cl.: G07F 17/32, G07C 9/37, G06V 40/12

(54) **GERÄT MIT FINGERABDRUCK-SENSOR**
DEVICE WITH FINGERPRINT SENSOR
APPAREIL ÉQUIPÉ D'UN CAPTEUR D'EMPREINTE DIGITALE

(30) Priorität: 23.04.2014 AT 503002014; 30.05.2014 DE 102014008160
(43) Veröffentlichungstag der Anmeldung: 01.03.2017
(73) Patentinhaber: Novomatic AG, 2352 Gumpoldskirchen (AT)
(72) Erfinder: HOMER, Alois, A-2352 Gumpoldskirchen (AT)
(74) Vertreter: Evans, Gary
(86) Internationale Anmeldenummer: PCT/EP2015/058783
(87) Internationale Veröffentlichungsnummer: WO 2015/162203

(56) Entgegenhaltungen:
- US-A1- 2002 081 005
- US-A1- 2014 028 439

## Beschreibung

### TECHNISCHES GEBIET

Die vorliegende Erfindung betrifft allgemein Geräte mit einem Fingerabdruck-Sensor. Insbesondere bezieht sich die vorliegende Erfindung auf Geräte, bei welchen der Fingerabdruck-Sensor einem Handgriff oder einer Handablage zugeordnet ist.

### STAND DER TECHNIK

Solche Geräte mit einem Fingerabdruck-Sensor können insbesondere Spiel- und/oder Unterhaltungs- und/oder Wettautomaten, wie sie in Casinos oder Spielhallen Verwendung finden, oder auch geld- bzw. geldwertmäßig betätigte Geräte wie Verkaufsautomaten sein, an denen bspw. Waren oder auch Spieljetons gekauft werden können, oder auch Zugangskontrollsysteme wie bspw. Drehkreuze oder Zugangsschrankensysteme sein.

Der Fingerabdruck-Sensor dient dabei allgemein der Nutzeridentifikation des jeweiligen Geräts, wobei die durch den Fingerabdruck-Sensor erfassten Biometriedaten beipielsweise des Daumens oder einer Fingerkuppe in verschiedener Art und Weise verwendet werden können. Beispielsweise kann eine mit dem Fingerabdruck-Sensor verbindbare Freischaltvorrichtung eine Gerätefunktion in Abhängigkeit des erfassten Fingerabdrucks freischalten, beispielsweise eine Gerätesperre aufheben oder eine Zugangsschranke freigeben, wenn der erfasste Fingerabdruck einem gespeicherten Fingerabdruck entspricht oder ausreichend nahekommt oder umgekehrt von einem gespeicherten Fingerabdruck ausreichend abweicht, das heißt mit Hilfe des Fingerabdrucks kann geprüft werden, ob eine berechtigte oder eine gesperrte Person das Gerät zu betätigen versucht.

Alternativ oder zusätzlich zu einer solchen Freischaltfunktion kann der Fingerabdruck-Sensor auch mit einer Geräteeinstellvorrichtung verbunden sein, mit Hilfe derer persönliche Geräteeinstellungen wie z.B. Bildschirmposition, Zeichen- und/oder Buchstabengröße oder andere Bilddarstellungsoptionen oder bspw. auch eine Spiele-Vorauswahl anhand des erfassten Fingerabdrucks benutzerindividuell vorkonfiguriert werden kann.

Alternativ oder zusätzlich kann der Fingerabdruck-Sensor auch mit einer Benutzererfassungs-Einrichtung verbunden sein, die in Abhängigkeit des jeweils erfassten Fingerabdrucks Nutzungsdaten einem individuellen Nutzerkonto zuschreibt - wie z.B. Nutzungszeiten oder erzielte Gewinne in ein Nutzerkonto speichert oder Spieleinsätze von einem Nutzerkonto in Abhängigkeit des jeweiligen Fingerabdrucks abbucht.

Bei bisherigen Geräten dieser Art ist die Handhabung und Benutzbarkeit des Fingerabdruck-Sensors jedoch bisweilen für den Benutzer unhandlich und für die Bedienung anderer Geräteelemente eher hinderlich, da der auf dem Fingerabdruck-Sensor zu positionierende Finger bzw. Daumen die übrigen Finger der Hand in einer bestimmten Position bindet.

Aus der Schrift DE 199 44 140 A1 ist ein geldbetätigtes Gerät in Form eines Spielautomaten bekannt, bei dem ein Fingerabdruck-Sensor in den Start-Schalter des Geräts, mit dem ein Spiel an dem Unterhaltungsgerät gestartet werden kann, integriert ist. Eine Miniaturkamera oder ein CCD-Flächensensor, die/der in der Berührungsfläche des genannten Start-Schalters vorgesehen ist, erfasst den Fingerabdruck des den Start-Schalter drückenden Benutzers, wobei der erfasste Fingerabdruck dann mit zuvor gespeicherten Fingerabdrücken verglichen wird, um zu prüfen, ob ein berechtigter Benutzer das Unterhaltungsgerät aktiviert. Da beim Auflegen des Fingers bzw. Daumens auf den Fingerabdruck-Sensor gleichzeitig der Start-Schalter niedergedrückt wird, erfolgt das Auflegen auf den Fingerabdruck-Sensor jedoch bisweilen zu ungestüm bzw. kann der Finger verrutschen, sodass die biometrischen Daten nicht sauber erfasst werden können.

Aus der Schrift US 2014/0028439 A1 ist ferner ein Türgriff bekannt, in den ein Fingerabdruck-Sensor integriert ist, um eine elektronische Türverriegelung in Abhängigkeit des erfassten Fingerabdrucks freizuschalten. Der Fingerabdruck-Sensor ist dabei auf einer dem Benutzer zugewandten Vorderseite des Handgriffs im Bereich der Drehachse des Türgriffs vorgesehen. Hierbei können jedoch ähnliche Probleme auftreten. Beim Drehen des Türgriffs kann der auf den Fingerabdruck-Sensor aufzulegende Daumen verrutschen, sodass die Biometriedaten nicht sauber erfasst werden können.

Ferner ist aus der WO 2011/041619 A1 ein Spielautomat bekannt, der ein separates Bedientablet umfasst, das per Kabel an ein Spiele-Computersystem anschließbar ist. Dabei soll auf dem Bedientablet ein Magnetstreifenkarten-Laser vorgesehen sein, dem ein Fingerabdruck-Sensor zugeordnet sein soll, um die Sicherheit zu erhöhen.

### DARSTELLUNG DER ERFINDUNG

Der vorliegenden Erfindung liegt daher die Aufgabe zugrunde, ein verbessertes Gerät der eingangs genannten Art zu schaffen, das Nachteile des Standes der Technik vermeidet und letzteren in vorteilhafter Weise weiterbildet. Insbesondere soll die Handhabung und Benutzbarkeit des Fingerabdruck-Sensors an dem Gerät vereinfacht werden.

Erfindungsgemäß wird die Aufgabe durch ein Gerät gemäß dem unabhängigen Anspruch gelöst. Bevorzugte Ausgestaltungen der Erfindung sind Gegenstand der abhängigen Ansprüche.

Es wird also vorgeschlagen, bei einem Gerät mit Handgriff den Fingerabdruck-Sensor nicht unmittelbar am Handgriff vorzusehen, sondern neben dem Handgriff in Daumenreichweite so anzuordnen, dass ein sich vom Handgriff weg erstreckender Daumen mit der Daumenkuppe auf den Fingerabdruck-Sensor zu liegen kommt. Umgreift eine Hand des Benutzers mit Zeige-, Mittel-, Ring- und/oder kleinem Finger den Handgriff, kommt der Daumen bei natürlicher Daumenhaltung, in der sich der Daumen vom umgriffenen Handgriff weg erstreckt, quasi wie von selbst (aufgrund der Handgeometrie) auf den Fingerabdruck-Sensor zu liegen. Erfindungsgemäß ist der Fingerabdruck-Sensor vom Handgriff beabstandet in der Nachbarschaft zum Handgriff derart angeordnet, dass bei Umgreifen des Handgriffs mit Zeige- und/oder Mittel- und/oder Ring- und/oder kleinem Finger einer Hand der Daumen dieser Hand neben dem Handgriff auf den Fingerabdruck-Sensor legbar ist. Eine Daumenkuppen-Längsachse des Daumens fällt dabei im Wesentlichen mit einer Hauptachse des Fingerabdruck-Sensors zusammen.

Der Fingerabdruck-Sensor kann dabei unmittelbar an einem Gerätegehäuse angeordnet sein, das an den Handgriff anschließt oder sich in der Umgebung des Handgriffs erstreckt, wobei das Gerätegehäuse beispielsweise einen an den Handgriff umgebenden Korpusteil des Geräts umschließen kann und/oder eine Befestigungsbasis für den Handgriff bilden kann. Der Fingerabdruck-Sensor kann dabei auf das Gerätegehäuse aufgesetzt sein. Alternativ kann der Fingerabdruck-Sensor aber auch in das Gerätegehäuse eingelassen bzw. auch im Gehäuse versenkt sein. Das heißt, der Fingerabdruck-Sensor ist gegenüber der umgebenden Gehäuseoberfläche zurückgesetzt bzw. eingelassen angeordnet sein. Alternativ zu einer Anordnung des Fingerabdruck-Sensors an oder in dem Gerätegehäuse kann der Fingerabdruck-Sensor aber auch an einem vom Gerätegehäuse separaten Geräteteil vorgesehen sein - wie z.B. an einen über das Gerätegehäuse vorspringenden Sensortragarm oder einem beispielsweise podestförmigen Sensorträger, welcher aus dem eigentlichen Gerätegehäuse heraussteht.

Um bei natürlicher Daumenhaltung ein intuitives Auflegen des Daumens auf den Fingerabdruck-Sensor wie von selbst zu erreichen, kann der Fingerabdruck-Sensor insbesondere quer zur Handgriff-Längsachse vom Handgriff versetzt angeordnet sein. Ist der Handgriff in Weiterbildung der Erfindung liegend ausgerichtet, kann der Fingerabdruck-Sensor vorteilhafterweise unterhalb des Handgriffs angeordnet sein. Ist der Handgriff alternativ aufrecht ausgerichtet, kann der Fingerabdruck-Sensor für rechtshändiges Greifen links vom Handgriff und für linkshändiges Greifen rechts vom Handgriff angeordnet sein, wobei für beidseitiges Greifen des Handgriffs hierbei auch auf beiden Seiten des Handgriffs ein solcher Fingerabdruck-Sensor vorgesehen sein kann.

Um den Fingerabdruck-Sensor gleichermaßen für die linke Hand und die rechte Hand passend angeordnet verwenden zu können, ist in der Erfindung der Handgriff positionsveränderbar ausgebildet so, dass der Handgriff relativ zu dem Fingerabdruck-Sensor in zwei verschiedene Arbeitspositionen bringbar ist. Dabei liegt eine dieser Arbeitspositionen bezüglich des Fingerabdrucks-Sensors so, dass der rechte Daumen auf den Fingerabdruck-Sensor legbar ist. Die andere Arbeitsposition liegt dabei so, dass der linke Daumen auf den Fingerabdruck-Sensor legbar ist. Vorteilhafterweise kann der Handgriff in der jeweiligen Arbeitsposition feststellbar sein, sodass eine Hand stabil abstützbar ist.

Der Handgriff kann hierbei beispielsweise umsteckbar ausgebildet beziehungsweise gelagert sein, sodass er durch Umstecken in zwei verschiedene Positionen bringbar ist. Alternativ oder zusätzlich kann der Handgriff auch verschwenkbar gelagert sein, sodass er zwischen den beiden vorgenannten Arbeitspositionen hin und her schwenkbar ist. Alternativ oder zusätzlich kann der Handgriff auch verschiebbar gelagert sein, beispielsweise entlang seiner Längsachse, sodass er einmal überwiegend links und ein anderes Mal überwiegend rechts von dem Fingerabdruck-Sensor zu liegen kommt und dementsprechend wahlweise für die linke Hand oder die rechte Hand passend zum Fingerabdruck-Sensor positioniert ist.

Vorteilhafterweise kann zusätzlich zu zumindest einer Arbeitsposition, in der der Daumen auf den Fingerabdruck-Sensor legbar ist, auch eine Parkstellung beziehungsweise Nichtarbeitsposition des Handgriffs vorgesehen sein, in der der Handgriff beispielsweise in einen Gerätekorpus versenkt oder unmittelbar an einer nicht störenden Stelle abgelegt ist.

Alternativ oder zusätzlich zu dem vorgenannten Querversatz des Fingerabdruck-Sensors kann der Fingerabdruck-Sensor auch in Längsrichtung des Handgriffs vom Handgriff bzw. einem Greifabschnitt des Handgriffs, der für den Handballen bzw. Zeige- und/oder Mittel- und/oder Ring- und/oder kleinen Finger vorgesehen ist, beabstandet angeordnet sein, insbesondere ein Stück weit über das Ende des Handgriffs bzw. Greifabschnitts, an dem bestimmungsgemäß der Zeigefinger greift, hinaus verschoben sein, sodass der vom Handballen schräg über das Handgriffende hinaus abstehende Daumen mit der Daumenkuppe bzw. dem letzten Daumenglied auf dem Fingerabdruck-Sensor zu liegen kommt, wenn die Hand mit den Fingern den genannten Handgriff greift.

Die Beabstandung des Fingerabdruck-Sensors vom Handgriff bzw. dessen Greifabschnitt ist dabei vorteilhafterweise auf die übliche Daumenreichweite einer durchschnittlich großen Hand begrenzt und kann einige, wenige Zentimeter quer zur Handgriff-Längsachse und/oder in Richtung der Handgriffs-Längsachse betragen.

Um ein unnatürliches Abspreizen des Daumens beim Auflegen des Daumens auf den Fingerabdruck-Sensor unter Umgreifen des Handgriffs mit den übrigen Fingern zu vermeiden, kann in Weiterbildung der Erfindung der Fingerabdruck-Sensor mit einer Hauptachse gegenüber der Längsachse des Handgriffs verkippt, insbesondere spitzwinklig geneigt angeordnet sein. Die genannte Hauptachse des Fingerabdruck-Sensors kann dabei eine Längsmittelachse der Auflagefläche des Fingerabdrucks-Sensors sein und/oder eine Hauptachse der Bildsensorik des Fingerabdruck-Sensors sein, in der die Auswerteeinrichtung des Fingerabdruck-Sensors eine Hauptachse des Abdruckbildes, insbesondere die Daumenkuppen-Längsachse erwartet.

Der Fingerabdruck-Sensor kann hierbei gegenüber der Längsachse des Handgriffs einachsig oder auch mehrachsig verkippt bzw. spitzwinklig geneigt angeordnet sein, wobei die genannte Hauptachse des Fingerabdruck-Sensors gegenüber dem Handgriff auch windschief ausgerichtet sein kann.

Die Hauptachse des Fingerabdruck-Sensors kann dabei um eine Kippachse, die im Wesentlichen senkrecht auf die Auflagefläche des Fingerabdruck-Sensors und/oder senkrecht auf das den Fingerabdruck-Sensor umgebende Gerätegehäuse ausgerichtet ist, gegenüber der Handgriff-Längsachse spitzwinklig verkippt sein. Alternativ oder zusätzlich kann die genannte Hauptachse des Fingerabdruck-Sensors auch um eine Kippachse, die sich zumindest näherungsweise parallel zu der Auflagefläche des Fingerabdruck-Sensors und/oder parallel zu dem den Fingerabdruck-Sensor umgebenden Gerätegehäuse erstreckt, gegenüber der Handgriff-Längsachse verkippt sein.

Die Neigung bzw. Verkippung der genannten Hauptachse gegenüber der Handgriff-Längsachse kann dabei grundsätzlich unterschiedlich bemessen sein, wobei zur Erreichung eines ergonomisch natürlichen Aufliegens des Daumens auf dem Fingerabdruck-Sensor die Neigung gegenüber der Handgriff-Längsachse bzgl. den genannten Achsen im Bereich von 5 Grad bis 35 Grad liegen kann. Je nach Konturierung des Handgriffes - der beispielsweise leicht gebogen sein kann, können jedoch auch andere Neigungen vorteilhaft sein.

In Weiterbildung der Erfindung kann der Fingerabdruck-Sensor eine aufrecht ausgerichtete Auflagefläche für den Daumen besitzen. Insbesondere kann der Fingerabdruck-Sensor eine Auflagefläche besitzen, die in einer Ebene liegt oder sich an eine Ebene anschmiegt, welche Ebene zur Handgriff-Längsachse spitzwinklig geneigt, z.B. unter einem Winkel von 10-30 Grad geneigt, angeordnet sein kann. Die genannte Ebene und der Handgriff können dabei einen näherungsweise im Bereich des Handballen zusammenlaufenden Keil definieren, das heißt die Auflagefläche spreizt sich mit zunehmenden Abstand vom Handgriff weiter von diesem weg.

In vorteilhafter Weiterbildung der Erfindung kann der Fingerabdruck-Sensor an einer dem Benutzer des Geräts zugewandten, zumindest näherungsweise aufrechten Vorderseite des Geräts angeordnet sein, sodass der Fingerabdruck-Sensor einem vor dem Gerät stehenden Benutzer zugewandt ist und eine vom Körper des Benutzers abgewandte Daumenkuppe auf den Fingerabdruck-Sensor legbar ist.

Bisweilen sind an Spielautomaten oder anderen Geräten der eingangs genannten Art alternativ oder zusätzlich zu den genannten Handgriffen auch eine Ablagefläche für die Finger einer offenen Hand, das heißt Zeige-, Mittel-, Ring- und/oder kleinen Finger vorgesehen, sodass der Benutzer des Geräts die flache Hand auf der genannten Auflagefläche ablegen kann. An dieser Auflagefläche können Bedientasten vorgesehen sein - wie z.B. ein Druckschalter oder ein Wippschalter, mit welchem Gerätefunktionen steuerbar sind. Eine solche Auflagefläche kann an einem liegenden Gehäuseabschnitt vorgesehen sein, wie z.B. einem liegend ausgerichteten Keyboard-Abschnitt. Alternativ kann eine solche Ablagefläche für die ausgestreckten Finger einer Hand auch an einer aufrechten Seitenfläche angeordnet sein, beispielsweise um an einem Flipper-Automaten, an dem rechts und links seitlich die Betätigungstasten für die Flipper-Flügel angebracht sind, die Flipper-Flügel betätigen zu können.

Gemäß einem weiteren Aspekt der vorliegenden Erfindung kann der Fingerabdruck-Sensor an einer Gerätegehäuseseite, die zu einer Gerätegehäuseseite, an der eine Ablagefläche für den Zeige- und/oder Mittel- und/oder Ring- und/oder kleinen Finger vorgesehen ist, spitzwinklig oder stumpfwinklig geneigt ist, derart angeordnet sein, dass bei Auflegen von Zeige- und/oder Mittel- und/oder Ring- und/oder kleinen Finger auf die Ablagefläche der einen Gerätegehäuseseite der Daumen auf den Fingerabdruck-Sensor auf der anderen Gerätegehäuseseite legbar ist. Der Fingerabdruck-Sensor und die Ablagefläche für Zeige- und/oder Mittel- und/oder Ring- und/oder kleinen Finger sind voneinander durch eine Gehäusekante, die gegebenenfalls gerundet ausgebildet sein kann, getrennt und auf zu verschiedenen Seiten hin ausgerichteten Gehäuseseiten angeordnet. Während die ausgestreckten Finger einer Hand auf der einen Gerätegehäuseseite aufliegen, kann der Daumen sozusagen in natürlicher Haltung um eine Gehäuseecke greifen und sozusagen um die Gehäusekante herum auf dem Fingerabdruck-Sensor aufliegen.

Insbesondere können die beiden Gehäuseseiten, auf denen einerseits die genannte Auflagefläche und andererseits der Fingerabdruck-Sensor angeordnet sind, zueinander zumindest näherungsweise rechtwinklig ausgerichtet sein.

In vorteilhafter Weiterbildung der Erfindung kann der Fingerabdruck-Sensor dabei an einer aufrechten Gehäuseseite angeordnet sein.

Die andere Gehäuseseite, an der die Ablagefläche für die übrigen Finger der Hand vorgesehen ist, kann liegend ausgerichtet sein, sich aber auch aufrecht erstrecken. Die genannte Ablagefläche kann dabei glatt und eben oder auch leicht reliefartig nach Art eines Fingerabdruckbettes konturiert sein, um ein intuitives Ablegen der ausgestreckten Finger an der richtigen Stelle zu fördern. An der genannten Ablagefläche für die Zeige-, und/oder Mittel-, und/oder Ring-, und/oder kleinen Finger kann dabei eine Betätigungstaste oder ein Betätigungselement zur Eingabe von Steuerbefehlen oder anderen Informationen an das Gerät angebracht sein, sodass die abgelegte Hand an der Auflagefläche gleichzeitig das Betätigungselement betätigen kann, während der um die Kante greifende Daumen vom Fingerabdruck-Sensor gescannt wird.

Der Fingerabdruck-Sensor kann hierbei mit einer Hauptachse - die in der vorgenannten Weise eine Mittellängsachse der Auflagefläche des Fingerabdruck-Sensors oder eine erwartete Hauptachse des Abdruckbildes in der vorgenannten Weise sein kann - zu der Längsrichtung der die beiden Gehäuseseiten trennenden bzw. verbindenden Gehäusekante spitzwinklig geneigt ausgerichtet sein, wobei die spitzwinklige Neigung der Hauptachse des Fingerabdruck-Sensors einachsig oder zweiachsig gegenüber der genannten Gerätekante verkippt sein kann, wobei die Verkippung analog der zuvor beschriebenen Verkippung gegenüber der Handgriff-Längsachse beschaffen sein kann, sodass zur Vermeidung von Wiederholungen auf die vorhergehende Beschreibung verwiesen werden darf.

In der Erfindung ist dabei der Fingerabdruck-Sensor nicht starr in einer festen Position relativ zum Handgriff bzw. relativ zur Fingerauflagefläche angeordnet bzw. ausgerichtet, sondern beweglich angeordnet bzw. beweglich gelagert, um in individuell - das heißt für den jeweiligen Benutzer und dessen Hand - passende Stellungen verbracht werden zu können.

Insbesondere kann der Fingerabdruck-Sensor um zumindest eine Drehachse verdrehbar oder kippbar gelagert sein, wobei in vorteilhafter Weiterbildung der Erfindung eine Verkippbarkeit um eine Kippachse, die zumindest näherungsweise senkrecht zu der Auflagefläche des Fingerabdruck-Sensors ausgerichtet ist, und/oder um eine Kippachse, die zumindest näherungsweise parallel zu einer Ebene, in die die Ablagefläche des Fingerabdruck-Sensors liegt oder an die sich die Ablagefläche anschmiegt, ausgerichtet ist, vorgesehen sein kann. Beispielsweise kann der Fingerabdruck-Sensor bei Anordnung an einer aufrechten Gehäuseseite um eine aufrechte Kippachse verkippbar und/oder um eine liegende Kippachse, die sich parallel zu der aufrechten Gehäuseseite, an der der Fingerabdruck-Sensor angeordnet ist, erstreckt, verkippbar bzw. verdrehbar sein. Alternativ oder zusätzlich zu den genannten aufrechten und liegenden Kippachsen kann der Fingerabdruck-Sensor auch um eine liegende, im Wesentlichen senkrecht zu der Gehäuseseite, an der der Fingerabdruck-Sensor angeordnet ist, sich erstreckende Kippachse verkippbar bzw. verdrehbar sein.

Alternativ oder zusätzlich zu einer solchen Kipp- bzw. Drehbarkeit kann der Fingerabdruck-Sensor auch translatorisch verschiebbar gelagert sein, insbesondere in einer Ebene näherungsweise parallel zu der Gehäuseseite, an der der Fingerabdruck-Sensor vorgesehen ist. Beispielsweise kann der Fingerabdruck-Sensor an einer aufrechten Gerätgehäusevorderseite nach oben und unten und/oder nach rechts und links verschiebbar sein, um eine optimale Position relativ zum Handgriff bzw. der zuvor beschriebenen Auflagefläche für die Finger sein. Ist der Fingerabdruck-Sensor an einer liegend ausgerichteten Gerätegehäusseite angeordnet, kann der Fingerabdruck-Sensor nach rechts und links und/oder nach vorne und hinten verschieblich sein.

Der Fingerabdruck-Sensor und der genannte Handgriff beziehungsweise die genannte Fingerauflagefläche können unmittelbar am Gerätegehäuse des Spielautomaten beziehungsweise des Hauptgerätes angeordnet sein. In alternativer Weiterbildung der Erfindung kann das den Fingerabdruck-Sensor und den Handgriff beziehungsweise die Fingerauflagefläche aufweisende Gerät jedoch auch als separates Eingabegerät ausgebildet sein, das eine Schnittstelle zum Verbinden mit dem Hauptgerät beispielsweise in Form eines Spielautomaten oder eines PCs aufweist. Die genannte Schnittstelle kann beispielsweise eine serielle Schnittstelle umfassen, beispielsweise in Form einer USB-Schnittstelle oder einer LAN- oder WLAN-Schnittstelle ausgebildet sein.

### AUSFÜHRUNG DER ERFINDUNG

Die Erfindung wird nachfolgend anhand bevorzugter Ausführungsbeispiele und zugehöriger Zeichnungen näher erläutert. In den Zeichnungen zeigen:
- Figur 1:: Eine schematische Draufsicht auf einen Gerätegehäuse-Abschnitt mit einem Handgriff, der von den Fingern einer Hand gegriffen wird, wobei der an einer aufrechten Gerätegehäuse-Vorderseite angeordnete Fingerabdruck-Sensor von einer Daumenkuppe berührt wird,
- Figur 2:: Eine perspektivische Vorderansicht des Gerätegehäuse-Abschnitts aus Figur 1, der die Anordnung des Fingerabdruck-Sensors an der Gerätegehäuse-Vorderseite und dessen Positionierung relativ zum Handgriff zeigt,
- Figur 3:: Eine perspektivische Darstellung des Gerätegehäuse-Abschnitts mit dem Handgriff aus den vorhergehenden Figuren,
- Figur 4:: Eine Draufsicht auf die Oberseite eines Gerätegehäuse-Abschnitts ähnlich Figur 1, wobei an der Gehäuseoberseite ein Ablagebereich für die ausgestreckten Finger einer Hand mit einer darin angeordneten Bedientaste vorgesehen ist und eine darauf abgelegte Hand mit dem um die Gerätegehäuse-Kante greifenden Daumen auf einem Fingerabdruck-Sensor positioniert ist, der an der aufrechten Vorderseite vorgesehen ist,
- Figur 5:: Eine perspektivische Vorderansicht des Gerätegehäuse-Abschnitts aus Figur 4, der auf der Oberseite den Ablagebereich mit der Bedientaste für die ausgestreckten Finger der Hand und auf der aufrechten Vorderseite die Anordnung des Fingerabdruck-Sensors zeigt,
- Figur 6:: Eine perspektivische Vorderansicht des Gerätegehäuse-Abschnitts aus Figur 1, wobei gemäß einer weiteren vorteilhaften Ausführung der Erfindung ein positionsveränderbarer Handgriff in verschiedene Stellungen relativ zu einem Fingerabdruck-Sensor bringbar ist, um wahlweise die linke oder die rechte Hand ablegen und den entsprechenden Daumen auf dem Fingerabdruck-Sensor positionieren zu können,
- Figur 7:: Eine schematische Draufsicht auf die Oberseite des Gerätegehäuse-Abschnitts aus Figur 6, wobei der Handgriff in die Stellung für Linkshand-Betrieb geschwenkt ist,
- Figur 8:: Eine Vorderansicht des Gerätegehäuse-Abschnitts aus Figur 1, wobei gemäß einer weiteren Ausführung der Erfindung ein zweigliedrig verschwenkbarer Handgriff vorgesehen ist, der zwischen zwei Arbeitsstellungen für rechte Hand- und linke Handbenutzung sowie einer Parkstellung bewegbar ist und an seiner beweglichen Stützstrebe den Fingerabdruck-Sensor trägt, wobei gemäß Figur 8 der Handgriff in einer Arbeitsstellung für die rechte Hand und in strichlierter Darstellung die Arbeitsstellung für die linke Hand gezeigt sind,
- Figur 9:: Eine Vorderansicht des Gerätegehäuse-Abschnitts ähnlich Figur 8, wobei der Handgriff in seiner Parkstellung beziehungsweise Nicht-Betriebsstellung gezeigt ist,
- Figur 10:: Eine Draufsicht auf den Gerätegehäuse-Abschnitt aus den beiden vorhergehenden Figuren, wobei der Handgriff in seiner Arbeitsstellung für die linke Hand gezeigt ist, und
- Figur 11:: Eine Gesamtansicht eines Geräts in Form eines Spiel- und/oder Unterhaltungsautomaten, das Bildschirme sowie ein liegend ausgerichtetes Bedienpaneel mit Eingabemitteln umfasst, wobei eine Ausführung nach dem Stand der Technik dargestellt ist, bei der ein Fingerabdruck-Sensor zentral an einer Oberseite des Bedienpaneels vorgesehen ist.

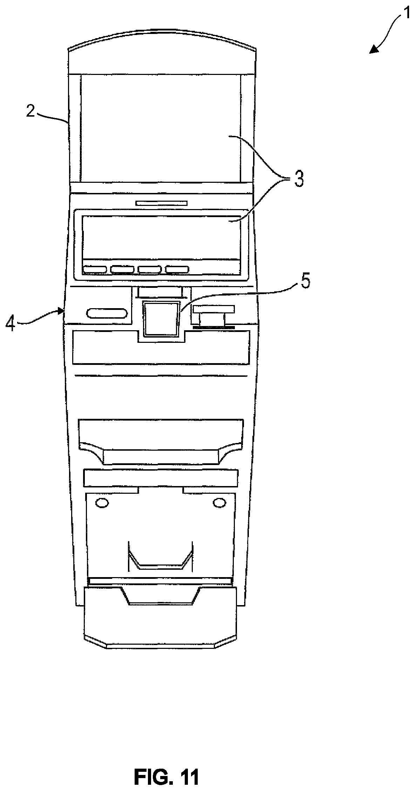

Wie Figur 11 zeigt - obwohl dort eine Fingerabdruck-Sensor-Anordnung nach dem Stand der Technik gezeigt ist - kann ein die Erfindung verwirklichendes Gerät bspw. als Spiel- und/oder Unterhaltungsgerät ausgebildet sein, wie es in Casinos oder Spielhallen Verwendung findet, wobei das Gerät bspw. als Stand-alone Gerät ausgebildet sein kann. Das Gerät 1 kann ein Gerätegehäuse 2 umfassen, das - grob gesprochen - näherungsweise kubusförmig, aber auch skulpturenhaft gestaltet sein kann. An dem genannten Gerätegehäuse 2 können ein oder mehrere Bildschirme 3 angeordnet, aber auch andere Anzeigemittel wie bspw. rotierende Walzen vorgesehen sein.

Ein Gerätegehäuse-Abschnitt 4, der vorteilhafterweise liegend ausgerichtet und bspw. paneelartig geformt sein kann, kann als Bedienungsabschnitt fungieren, wobei an dem genannten Gerätegehäuse-Abschnitt 4 Eingabemittel bspw. in Form von Bedientasten oder Touchscreen-Elementen vorgesehen sein können.

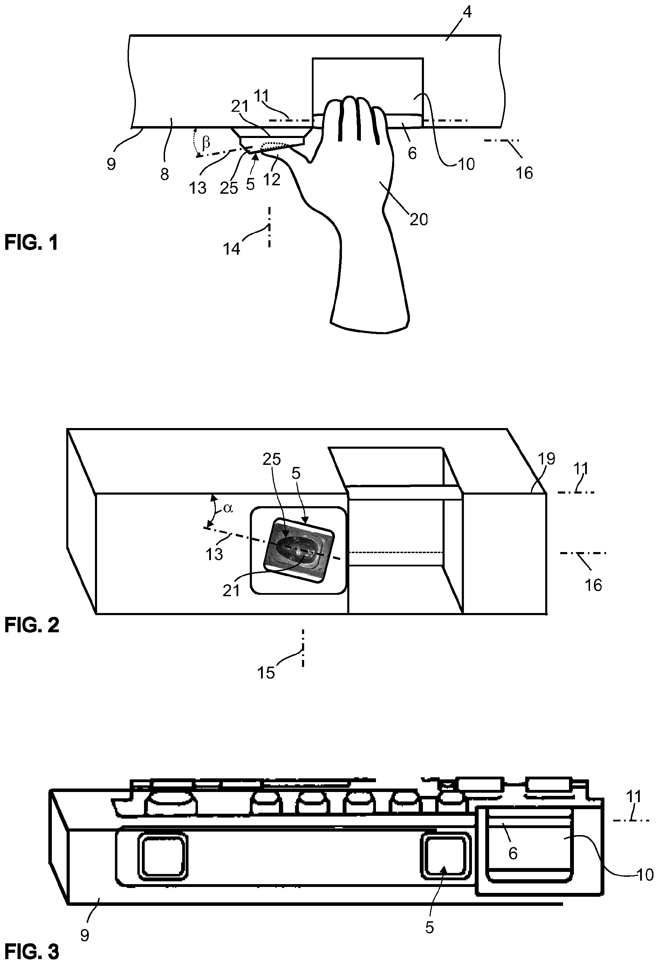

Während bei Gerätschaften des Standes der Technik ein Fingerabdruck-Sensor 5, wie dies Figur 11 zeigt, zentral an einer Oberseite des genannten Gerätegehäuse-Abschnitts 4 leicht ansteigend angeordnet war, wird der Fingerabdruck-Sensor 5 gemäß den Ausführungsbeispielen der Erfindung, die die Figuren 1 bis 5 zeigen, in spezieller Weise relativ zu einem Handgriff bzw. einer Handablagefläche angeordnet.

Wie die Figuren 1 bis 3 zeigen, kann der genannte Gerätegehäuse-Abschnitt 4, der insgesamt betrachtet liegend ausgerichtet sein kann, einen Handgriff 6 umfassen, der liegend an einer Vorderseite des Gerätegehäuse-Abschnitts 4 angeordnet sein kann. Insbesondere kann der genannte Handgriff 6 - grob gesprochen - stangenförmig ausgebildet sein und/oder an einer Gehäusekante 19, die eine liegende Oberseite 8 und eine aufrechte Vorderseite 9 des Gerätegehäuse-Abschnittes 4 verbindet, angeordnet sein. Der Gerätegehäuse-Abschnitt 4 kann hierbei um den Handgriff 6 herum eine Ausnehmung 10 umfassen, sodass eine Hand 20 den Handgriff 6 mit den Zeige-, Mittel-, Ring-, und kleinen Fingern umgreifen kann. Der notwendige Freiraum zum Umgreifen des Handgriffes 6 kann jedoch auch durch eine bspw. bogenförmige oder vorspringende Konturierung des Handgriffes 6 erzielt werden, sodass die genannte Ausnehmung 10 nicht zwingend ist.

Wie die Figuren 1 und 2 zeigen, kann dem Handgriff 6 ein Fingerabdruck-Sensor 5 zugeordnet sein, der quer zur Längsachse 11 des Handgriffes 6 und auch in Richtung der genannten Längsachse 11 von einem Ende des Handgriffes 6 beabstandet angeordnet ist. Insbesondere kann der genannte Fingerabdruck-Sensor 5 an der aufrechten Vorderseite 9 des Gerätegehäuse-Abschnittes 4 angeordnet sein, wobei der Fingerabdruck-Sensor 5 ein Stück weit unterhalb des Handgriffes 6 zu einer Seite hin vom Handgriff 6 weg - gemäß Figur 2 nach links - angeordnet sein kann, sodass ein den Handgriff 6 nicht umgreifender, sondern vom Handgriff 6 weg gespreizter Daumen 12 bei natürlicher, intuitiver Daumenhaltung auf dem genannten Fingerabdruck-Sensor 5 zu liegen kommt.

Der Abstand des Fingerabdruck-Sensors 5 vom genannten Handgriff 6 quer zur Handgriff-Längsachse 11 und/oder in Richtung der Handgriff-Längsachse 11 vom Handgriffende (gemäß Figur 2 nach unten und links bzgl. des Handgriffes 6) beträgt vorteilhafterweise der Beabstandung der Daumenkuppe vom Wurzelgelenk des Zeigefingers, das heißt der üblichen Daumenreichweite bei abgespreiztem Daumen und kann einige wenige Zentimeter betragen.

Wie Figur 2 zeigt, kann der Fingerabdruck-Sensor 5 mit einer Hauptachse 13 gegenüber der Handgriff-Längsachse 11 spitzwinklig um einen Winkel α verkippt angeordnet sein, wobei der genannte Winkel α beispielsweise 5 bis 35 Grad betragen kann, insbesondere derart bemessen ist, dass die Hauptachse 13 der Daumen-Längsachse bei natürlicher Daumenhaltung entspricht. Vorteilhafterweise kann der Fingerabdruck-Sensor 5 eine Daumen-Führung 25 zur leichteren Positionierung des Daumens auf dem Fingerabdruck-Sensor 5 aufweisen. Beispielsweise können seitliche Wände oder Erhöhungen vorhanden sein, die parallel zur Hauptachse 13 verlaufen und so den Daumen seitlich (links und rechts) führen, so dass eine optimale Orientierung des Daumens in Bezug zu einer Auflagefläche 21 des Fingerabdruck-Sensors 5 gegeben ist. Zusätzlich oder optional kann eine vordere Führungs-Wand vorhanden sein, die quer zur Hauptachse 13 angeordnet ist und einen Anschlag für den Daumen bildet, d.h. dass der Anschlag ein weiteres Hineinführen des Daumens in den Fingerabdruck-Sensor 5 in Richtung der Hauptachse 13 verhindert. Wie in der Fig. 1 gezeigt ist, ist die Daumen-Führung 25 einstückig als Daumenmulde ausgebildet, insofern ist der Daumen seitlich (links und rechts) geführt als auch gleichzeitig der Daumen vorne, d.h. die Daumenspitze, begrenzt.

Alternativ oder zusätzlich zu der in Figur 2 zu sehenden Verdrehung des Fingerabdruck-Sensors 5 in der Ebene der Vorderseite 9 - das heißt um eine Achse senkrecht zu der Vorderseite 9 - kann der Fingerabdruck-Sensor 5 mit seiner Auflagefläche 21 bzw. seiner Hauptachse 13 aus der Vorderseite 9 herausgekippt sein. Diese Verkippung bzgl. einer Vorderseiten parallelen, aufrechten Kippachse 15 zeigt der in Figur 1 zu sehende spitze Winkel β gegenüber der Handgriff-Längsachse 11. Diese Verkippung kann ebenfalls im Bereich von etwa zwei (2) bis 35 Grad liegen.

Alternativ oder zusätzlich kann der Fingerabdruck-Sensor 5 mit seiner Auflagefläche auch um eine liegende Kippachse 16 gegenüber der Gerätegehäuse-Vorderseite 9 bzw. der Handgriff-Längsachse 11 verkippt sein.

In der Erfindung ist der Fingerabdruck-Sensor 5 in seiner Ausrichtung bzgl. des Handgriffes 6 nicht starr befestigt, sondern drehbar bzw. kippbar gelagert. Eine Verdrehbarkeit bzw. Kippbarkeit kann dabei bzgl. einer, mehrerer oder aller der vorgenannten Kippachsen 14, 15 und 16 vorgesehen sein, wobei die Verdrehbarkeit derart beschaffen sein kann, dass der Fingerabdruck-Sensor 5 in verschiedene Dreh- bzw. Kippstellungen bringbar ist, in denen er dann selbsttätig bzw. selbsthemmend seine Stellung hält oder auch durch Fixiermittel fixiert werden kann. Alternativ oder zusätzlich ist auch eine Rückstellung in eine neutrale Ausgangsstellung beispielsweise mittels den Kippachsen 14, 15 und 16 zugeordneten Federmitteln möglich. Es kann erwähnt werden, dass die Kippbarkeit bzw. insbesondere die Verdrehbarkeit durch eine am Fingerprint-Sensor 5 angeordnete Daumen-Führung unterstützt sein kann.

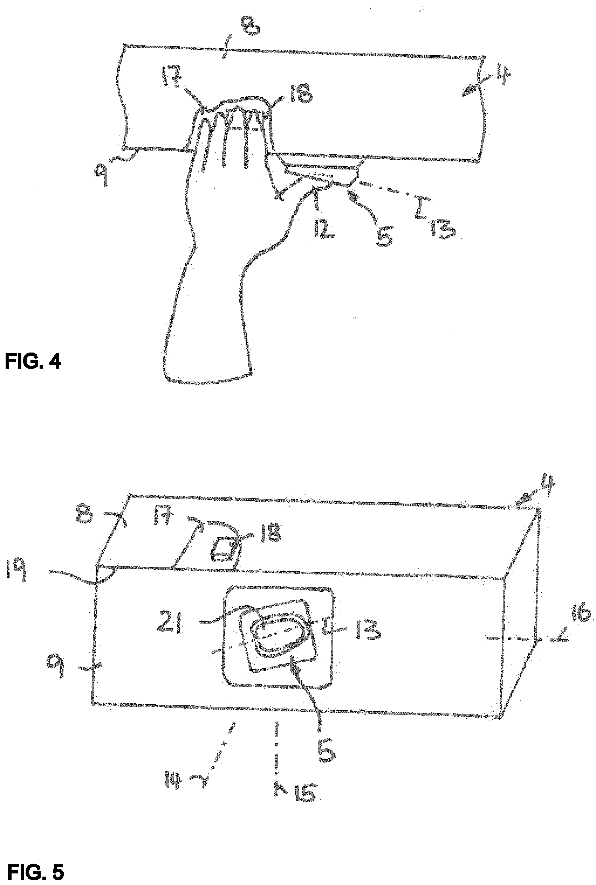

Wie die Figuren 4 und 5 zeigen, kann der Fingerabdruck-Sensor 5 auch einer Ablagefläche 17, auf der die Zeige-, und/oder Mittel-, und/oder Ring-, und/oder kleinen Finger der Hand abgelegt werden können, zugeordnet sein, wobei die genannte Ablagefläche 17 bspw. in Form einer leichten Mulde konturiert sein kann, um die Hand intuitiv in die richtige Stellung zu führen. Beispielsweise kann der Ablagefläche 17 auch ein Eingabemittel bspw. in Form einer Bedientaste 18 zugeordnet sein, mit Hilfe derer z.B. Steuerbefehle für das Geräte eingegeben werden können.

Die genannte Ablagefläche 17 ist dabei auf einer ersten Gerätegehäuseseite vorgesehen, die die liegende Oberseite 8 des Gerätegehäuse-Abschnittes 4 bilden kann. Der Fingerabdruck-Sensor 5 hingegen ist auf einer zweiten Gerätegehäuseseite angeordnet, die zu der genannten ersten Gerätegehäuseseite geneigt, insbesondere etwa senkrecht angeordnet sein kann. Insbesondere kann der Fingerabdruck-Sensor 5 an einer aufrechten Vorderseite 9 des Gerätegehäuse-Abschnittes 4 vorgesehen sein.

Der Fingerabdruck-Sensor 5 ist dabei von der Ablagefläche 17 für die Finger quer zur Gehäusekante 19, die die beiden vorgenannten Gerätegehäuseseiten verbindet, beabstandet und/oder in Längsrichtung der genannten Gehäusekante 19 von der Ablagefläche 17 beabstandet, insbesondere derart, dass der Daumen 12 einer Hand, deren Zeige- bis kleinen Finger bestimmungsgemäß auf der Ablagefläche 17 ruhen, in natürlicher Haltung intuitiv auf dem Fingerabdruck-Sensor 5 zu liegen kommt, vgl. Figur 4.

Der Fingerabdruck-Sensor 5 kann dabei vorteilhafterweise drehbar bzw. verkippbar angeordnet sein, sowie dies für die Ausführung gemäß den Figuren 1 bis 3 beschrieben war. Die entsprechenden Kippachsen 14 bis 15 sind in die Figuren 4 und 5 ebenfalls eingetragen. Vorteilhafterweise ist der Fingerabdruck-Sensor 5 mit seiner Hauptachse 13 in entsprechender Weise in eine spitzwinklig geneigte Ausrichtung zu der Längsachse der Gerätegehäusekante 19, wie dies zuvor für die spitzwinklige Neigung gegenüber der Handgriff-Längsachse 11 erläutert wurde. Zur Vermeidung von Wiederholungen wird auf die vorherige Beschreibung verwiesen.

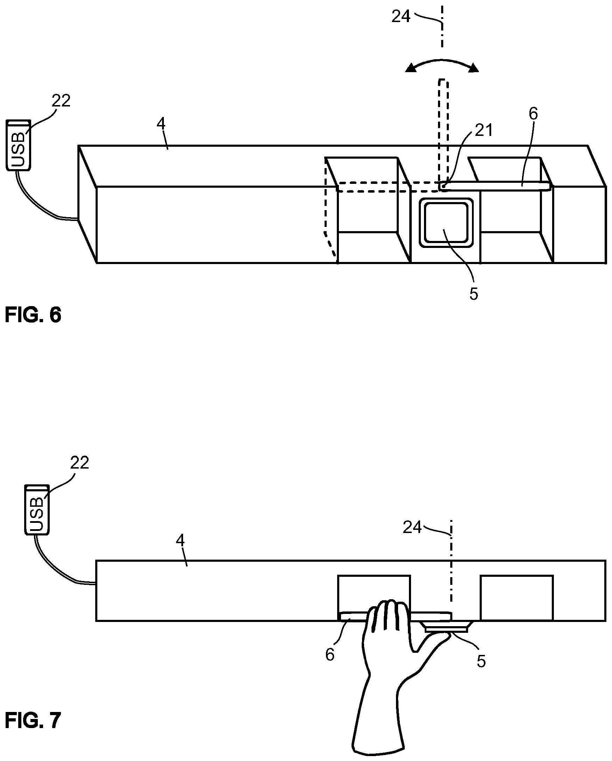

Wie die Figuren 6 und 7 zeigen, ist der Handgriff 6 auch positionsveränderbar ausgebildet, insbesondere derart, dass der Handgriff 6 in zwei verschiedene Arbeitspositionen relativ zu dem Fingerabdruck-Sensor 5 bringbar ist. Eine Arbeitsposition kann dabei insbesondere einer linkshändigen Bedienung und die andere Arbeitsposition einer rechtshändigen Bedienung des Fingerabdruck-Sensors 5 dienen.

Die Positionsveränderbarkeit des Handgriffs 6 kann dabei insbesondere eine Spiegelbildlichkeit beziehungsweise Symmetrie zu dem Fingerabdruck-Sensor 5 aufweisen, insbesondere derart, dass die beiden genannten Arbeitspositionen bezüglich einer durch den Fingerabdruck-Sensor 5 gehenden Symmetrie-Ebene 24 symmetrisch sind. Insbesondere kann der Handgriff 6 eine erste Arbeitsposition aufweisen, in der ein zumindest größerer Teil des Handgriffs 6 auf einer rechten Seite des Fingerabdruck-Sensors 5 liegt, während in einer zweiten Arbeitsposition ein zumindest größerer Teil des Handgriffs 6 auf einer linken Seite des Fingerabdruck-Sensors liegt.

Beispielsweise kann der Handgriff 6 schwenkbar gelagert sein, wie dies Figur 6 zeigt, wobei der Handgriff hierbei eine Schwenkachse senkrecht zur Längsrichtung des Handgriffs 6 aufweisen kann, die sich etwa mittig bezüglich des Fingerabdruck-Sensors 5 erstrecken kann, beispielsweise mittig oberhalb des genannten Fingerabdruck-Sensors 5 angeordnet sein kann.

Alternativ oder zusätzlich zu einer solchen schwenkbaren Lagerung um die Schwenkachse 21 kann der Handgriff 6 jedoch auch in anderer Weise beweglich beziehungsweise positionsveränderlich sein, beispielsweise durch Umstecken zwischen zwei oder mehreren Arbeitspositionen, und/oder durch eine Verschiebbarkeit des Handgriffes 6, beispielsweise in Form einer verschieblichen Lagerung des Handgriffs 6 parallel zu dessen Längsachse. Betrachtet man Figur 6, könnte der Handgriff 6 auch durch Verschieben in Längsrichtung aus der mit durchgezogener Linie dargestellten rechthändigen Arbeitsstellung in die strichliert dargestellte linkshändige Arbeitsstellung verbracht werden.

Der Handgriff 6 ist dabei in seinen Arbeitspositionen relativ zu dem Fingerabdruck-Sensor 5 jeweils derart positioniert, das der Daumen der rechten bzw. linken Hand in der genannten Weise auf dem Fingerabdruck-Sensor 5 positionierbar ist. Um die zuvor beschriebene spitzwinklige Ausrichtung bzw. Verkippung des Fingerabdruck-Sensors 5 für beide Arbeitspositionen passend bereitstellen zu können, kann der Fingerabdruck-Sensor 5 in geeigneter Weise verdrehbar bzw. verkippbar gelagert sein, wie dies grundsätzlich schon beschrieben war.

Wie die Figuren 6 und 7 ebenfalls zeigen, kann der Handgriff 6 nicht nur unmittelbar am Gerätegehäuse 2 des Hauptgeräts 1 bzw. des Spielautomaten angeordnet sein, sondern an einem Gerätegehäuse-Abschnitt 4 eines vom Hauptgerät separaten Bediengeräts, welches eine Schnittstelle 22 aufweist, um an das Hauptgerät 1 angeschlossen werden zu können. Diese Schnittstelle 22 kann eine drahtgebundene parallele oder serielle Schnittstelle beispielsweise in Form einer USB-Schnittstelle oder RS-232-Schnittstelle sein oder auch eine drahtlos arbeitende Schnittstelle, beispielsweise in Form einer WLAN-Schnittstelle oder Bluetooth- oder auf Basis von Infrarot-Signalen arbeitende IrDA-Schnittstelle oder eine Kombination dieser Schnittstellen sein.

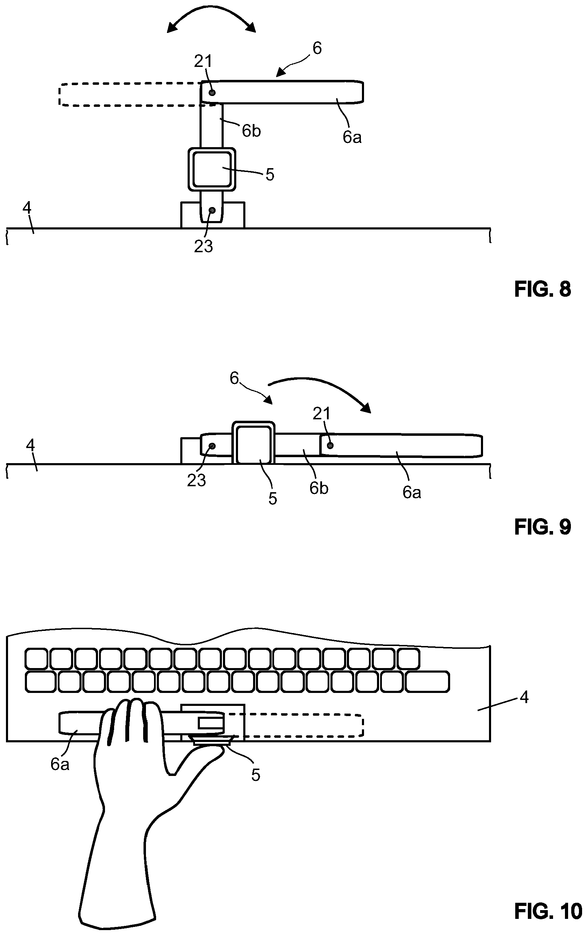

Wie die Figuren 8 bis 10 zeigen, kann der Handgriff 6 auch mehrgliedrig ausgebildet sein, beispielsweise um zusätzlich zu den beiden Arbeitspositionen auch noch eine Parkposition bzw. Nicht-Betriebsposition einnehmen zu können, die in Figur 9 gezeigt ist.

Insbesondere kann der Handgriff 6 ein Griffelement 6a umfassen, das den eigentlichen Handgriff bildet, auf dem der Handballen abgestützt werden und das von den Fingern einer Hand umgriffen werden kann, wobei das genannte Griffelement beispielsweise länglich oder stangenförmig ausgebildet sein kann. Das genannte Griffelement 6 kann auf einem Stützglied 6b abgestützt sein, welches Stützglied 6b beweglich an dem Gerätegehäuse-Abschnitt 4 gelagert sein kann. Beispielsweise kann das genannte Stützglied 6b des Handgriffes 6 um eine Schwenkachse 23, die sich senkrecht zur Längsrichtung des Stützgliedes 6b erstreckt, schwenkbar gelagert sein. Das Griffelement 6a des Handgriffes 6 kann wiederum schwenkbar an dem genannten Stützglied 6b angelenkt sein, wobei sich die Schwenkachse 21 des Griffelements 6a wiederum senkrecht zur Längsrichtung des genannten Griffelements erstrecken kann.

Das genannte Stützglied 6b bildet sozusagen einen Lenker für die gelenkige Anlenkung des Griffelements 6a am Gerätegehäuse-Abschnitt 4, der Teil des Gerätegehäuses des Hauptgeräts oder eines separaten Bediengeräts sein kann.

Vorteilhafterweise kann die Bewegbarkeit des Handgriffes 6 derart ausgebildet sein, dass der Handgriff 6 in eine Parkstellung bringbar ist, in der sich der Handgriff 6 vorzugsweise einschließlich seines Griffelements 6a und seines Stützglieds 6b an dem Gerätegehäuse-Abschnitt 4 anschmiegt beziehungsweise sich benachbart zu diesem Gehäuseabschnitt an diesem entlang erstreckt und sozusagen platzsparend aufgeräumt ist.

Um den Handgriff 6 in seine Arbeitsposition zu bringen, wird das Stützglied 6b aufgerichtet beziehungsweise von dem Gerätegehäuse-Abschnitt 4 auskragend (z.B. senkrecht) positioniert und gegebenenfalls fixiert werden, beispielsweise durch eine lösbare Steck-Formschlussverbindung oder Schraub-Klemmverbindung oder eine selbsthemmende Rastverbindung. Das Griffelement 6a kann zu dem Stützglied 6b abgewinkelt werden, wobei auch die zwei verschiedenen Arbeitsstellungen, d.h. eine erste Arbeitsposition in der ein zumindest größerer Teil des Griffelements 6a auf einer rechten Seite des Fingerabdruck-Sensors 5 liegt, während in einer zweiten Arbeitsposition ein zumindest größerer Teil des Griffelements 6a auf einer linken Seite des Fingerabdruck-Sensors 5 liegt, eingestellt werden können.

Der Fingerabdruck-Sensor 5 kann vorteilhafterweise an dem genannten Stützglied 6b und damit am Handgriff 6 angeordnet sein, wobei die Anordnung wiederum derart getroffen sein kann, dass bei Umgreifen des Griffelements 6a mit Zeige-, Mittel-, Ring- und/oder kleinem Finger einer Hand der Daumen dieser Hand neben dem Handgriffelement 6a auf dem Fingerabdruck-Sensor 5 legbar ist.

Wie die Figuren 8 und 10 zeigen, kann das Griffelement 6a des Handgriffs 6 in zwei verschiedene Arbeitspositionen relativ zu dem Stützglied 6b und damit zu dem Fingerabdruck-Sensor 5 verbracht werden, um wahlweise mit der linken Hand oder der rechten Hand den Handgriff 6 greifen und den Fingerabdruck-Sensor 5 bedienen zu können. Anstelle der in den Figuren 8 bis 10 gezeigten Verschwenkbarkeit kann auch bei einer mehrgliedrigen Ausbildung des Handgriffes 6 eine Positionsveränderlichkeit in anderer Weise vorgesehen sein, beispielsweise durch Umstecken oder Verschieben. Beispielsweise kann das Griffelement 6a in verschiedenen Stellungen auf das Stützglied 6b steckbar sein und das Stützglied 6b in verschiedenen Stellungen ab Gerätegehäuse-Abschnitt 4 feststeckbar sein.

## Patentansprüche

1. Ein Gerät mit einem Fingerabdruck-Sensor (5), wobei der Fingerabdruck-Sensor (5) von einem Handgriff (6) des Geräts beabstandet in der Nachbarschaft zu dem Handgriff (6) derart angeordnet ist, dass bei Umgreifen des Handgriffs (6) mit Zeige-, und/oder Mittel-, und/oder Ring- und/oder kleinem Finger einer Hand (20) der Daumen (12) dieser Hand (20) neben dem Handgriff (6) auf den Fingerabdruck-Sensor (5) legbar ist, so dass eine Daumenkuppen-Längsachse des Daumens (12) mit einer Hauptachse (13) des Fingerabdruck-Sensors (5) im Wesentlichen zusammenfällt, **dadurch gekennzeichnet, dass** der Handgriff (6) relativ zu dem Fingerabdruck-Sensor (5) positionsveränderbar und in zwei Arbeitspositionen bringbar ist, von denen eine Arbeitsposition für eine linkshändige Bedienung des Fingerabdruck-Sensors (5) und eine andere Arbeitsposition für eine rechtshändige Bedienung des Fingerabdruck-Sensors (5) vorgesehen ist und dass der Fingerabdruck-Sensor (5) drehbar oder kippbar gelagert ist.

2. Das Gerät nach Anspruch 1, wobei der Fingerabdruck-Sensor (5) quer zu einer Handgriff-Längsachse (11) von dem Handgriff (6) versetzt und/oder in Richtung der Handgriff-Längsachse (11) von dem Handgriff (6) und/oder einem Greifabschnitt des Handgriffs (6) beabstandet angeordnet ist.

3. Das Gerät nach Anspruch 1 oder 2, wobei der Fingerabdruck-Sensor (5) relativ zum Handgriff (6) translatorisch verschiebbar gelagert ist.

4. Das Gerät nach einem der Ansprüche 1 bis 3, wobei der Fingerabdruck-Sensor (5) um eine Kippachse (14), die sich näherungsweise senkrecht zu einer Auflagefläche (21) des Fingerabdruck-Sensors (5) und/oder näherungsweise senkrecht zu einer an den Fingerabdruck-Sensor (5) angrenzenden Gehäuseseite erstreckt, und/oder um eine aufrechte Kippachse (15) und/oder um eine liegende Kippachse (16), die näherungsweise parallel zur Auflagefläche des Fingerabdruck-Sensors (5) verläuft, verkippbar ist.

5. Das Gerät nach einem der Ansprüche 1 bis 4, wobei der Fingerabdruck-Sensor (5) mit der Hauptachse (13) des Fingerabdruck-Sensors (5) in eine zur Handgriff-Längsachse (11) spitzwinklig geneigte Ausrichtung bringbar ist.

6. Das Gerät nach dem Anspruch 5, wobei der Fingerabdruck-Sensor (5) mit seiner Hauptachse (13) in eine zweiachsig-spitzwinklig verkippte Ausrichtung zum Handgriff (6) und/oder in eine windschiefe Ausrichtung zum Handgriff (6) bringbar ist.

7. Das Gerät nach einem der Ansprüche 1 bis 6, wobei der Handgriff (6) liegend ausgerichtet und der Fingerabdruck-Sensor (5) unterhalb des Handgriffs (6) angeordnet ist.

8. Das Gerät nach einem der Ansprüche 1 bis 7, wobei der Fingerabdruck-Sensor (5) eine aufrecht ausgerichtete Auflagefläche (21) besitzt.

9. Das Gerät nach einem der Ansprüche 1 bis 8, wobei eine Auflagefläche des Fingerabdruck-Sensors (5) in einer Ebene liegt oder sich an eine Ebene schmiegt, welche Ebene zur Handgriff-Längsachse (11) spitzwinklig geneigt ist.

10. Das Gerät nach einem der Ansprüche 1 bis 9, wobei der Handgriff (6) zwischen den zwei Arbeitspositionen hin und her bewegbar gelagert ist und die zwei Arbeitspositionen symmetrisch bezüglich einer durch den Fingerabdruck-Sensor (5) gehenden Symmetrieebene (24) und/oder Symmetrieachse angeordnet sind.

11. Das Gerät nach einem der Ansprüche 1 bis 10, wobei der Handgriff (6) zwischen zumindest einer der zwei Arbeitspositionen und einer Park- und/oder Nicht-Betriebsposition bewegbar gelagert ist.

12. Das Gerät nach einem der Ansprüche 1 bis 11, wobei der Handgriff (6) um zumindest eine Schwenkachse (21) schwenkbar gelagert ist, welche Schwenkachse (21) sich vorzugsweise an einem Endabschnitt des Handgriffs (6) senkrecht zur Längsrichtung des Handgriffes (6) erstreckt.

13. Das Gerät nach einem der Ansprüche 1 bis 12, wobei der Handgriff (6) mehrgliedrig ausgebildet und zueinander positionsveränderbare Handgriffteile umfasst, wobei der Fingerabdruck-Sensor (5) an einem der Handgriffteile (6b) angebracht ist.

14. Das Gerät nach dem Anspruch 13, wobei der Handgriff (6) ein mehrachsig verschwenkbares Griffelement (6a) aufweist, das relativ zu zumindest einem Stützglied (6b) des Handgriffes (6) um eine Schwenkachse (21) schwenkbar ist, welches Stützglied (6b) selbst schwenkbar um eine Schwenkachse (23) zum Gerätegehäuse-Abschnitt (4) gelagert ist.

15. Das Gerät nach einem der Ansprüche 1 bis 14, wobei das Gerät als von einem Hauptgerät separates Bediengerät ausgebildet ist, welches Bediengerät eine Schnittstelle zum Verbinden mit dem Hauptgerät besitzt.

## Claims

1. Device with a fingerprint sensor (5), wherein the fingerprint sensor (5) is arranged spaced apart from a handle (6) of the device in the vicinity of the handle (6) such that, when the handle (6) is grasped by index finger and/or middle finger and/or ring finger and/or little finger of a hand (20), the thumb (12) of this hand (20) can be placed next to the handle (6) on the fingerprint sensor (5), such that a thumb-tip longitudinal axis of the thumb (12) coincides substantially with a main axis (13) of the fingerprint sensor (5), **characterised in that** the handle (6) can be brought into position relative to the fingerprint sensor (5) and into two work positions, one work position being provided for a left-handed operation of the fingerprint sensor (5) and another work position being provided for a right-handed operation of the fingerprint sensor (5), and that the fingerprint sensor (5) is mounted in a rotatable or tiltable manner.

2. Device according to claim 1, wherein the fingerprint sensor (5) is arranged offset from the handle (6) across a handle longitudinal axis (11) and/or at a distance from the handle (6) and/or a grip portion of the handle (6) in direction of the handle longitudinal axis (11).

3. Device according to claim 1 or 2, wherein the fingerprint sensor (5) is mounted in translationally displaceable manner, relative to the handle (6).

4. Device according to one of claims 1 to 3, wherein the fingerprint sensor (5) can be tilted about a tilt axis (14) which extends approximately perpendicular to a bearing surface (21) of the fingerprint sensor (5) and/or approximately perpendicular to a housing side adjoining the fingerprint sensor (5) and/or about an upright tilt axis (15) and/or about a horizontal tilt axis (16) which extends approximately parallel to the bearing surface of the fingerprint sensor (5).

5. Device according to one of claims 1 to 4, wherein the fingerprint sensor (5) can be brought into an acute angled inclined alignment, relative to the handle longitudinal axis (11), with the main axis (13) of the fingerprint sensor (5).

6. Device according to claim 5, wherein the fingerprint sensor (5) can be brought with its main axis (13) into an acute angled tilted alignment about two axes to the handle (6) and/or into a skew alignment to the handle (6).

7. Device according to one of claims 1 to 6, wherein the handle (6) has a horizontal alignment, and the fingerprint sensor (5) is arranged below the handle (6).

8. Device according to one of claims 1 to 7, wherein the fingerprint sensor (5) has a bearing surface (21) with an upright alignment.

9. Device according to one of claims 1 to 8, wherein a bearing surface of the fingerprint sensor (5) lies in a plane or nestles to a plane which is at an acute angle relative to the handle longitudinal axis (11).

10. Device according to one of claims 1 to 9, wherein the handle (6) is mounted movable back and forth between the two work positions, and the two work positions are arranged symmetrically in respect of a symmetry plane (24) and/or axis of symmetry passing through the fingerprint sensor (5).

11. Device according to one of claims 1 to 10, wherein the handle (6) is mounted movable between at least one of the two work positions and a parked and/or non-operational position.

12. Device according to one of claims 1 to 11, wherein the handle (6) is mounted swivellable about at least one swivel axis (21), which swivel axis (21) extends perpendicular to the longitudinal direction of the handle (6), preferably at an end portion of the handle (6).

13. Device according to one of claims 1 to 12, wherein the handle (6) has a multi-member design and comprises handle parts, the positions of which can change relative to one another, wherein the fingerprint sensor (5) is attached to one of the handle parts (6b).

14. Device according to claim 13, wherein the handle (6) has a handle element (6a) which can pivot about multiple axes and can swivel about a swivel axis (21) relative to at least one support member (6b) of the handle (6), which support member (6b) is itself mounted swivellable about a swivel axis (23) relative to the device housing portion (4).

15. Device according to one of claims 1 to 14, wherein the device is designed as an operating device separate from a main device, which operating device possesses an interface for connection to the main device.

## Revendications

1. Appareil équipé d'un capteur d'empreinte digitale (5), dans lequel le capteur d'empreinte digitale (5) est disposé à distance d'une poignée (6) de l'appareil, au voisinage de la poignée (6), de telle sorte que, lorsque l'on passe l'index, et/ou le majeur, et/ou l'annulaire et/ou l'auriculaire d'une main (20) autour de la poignée (6), le pouce (12) de cette main (20) peut être posé sur le capteur d'empreinte digitale (5) à côté de la poignée (6), de sorte qu'un axe longitudinal de pointe de pouce du pouce (12) coïncide sensiblement avec un axe principal (13) du capteur d'empreinte digitale (5), **caractérisé en ce que** la poignée (6) peut changer de position par rapport au capteur d'empreinte digitale (5) et peut être amenée dans deux positions de travail, dont une position de travail est prévue pour une utilisation de la main gauche du capteur d'empreinte digitale (5) et une autre position de travail pour une utilisation de la main droite du capteur d'empreinte digitale (5), et **en ce que** le capteur d'empreinte digitale (5) est logé de manière à pouvoir tourner ou basculer.

2. Appareil selon la revendication 1, dans lequel le capteur d'empreinte digitale (5) est décalé transversalement par rapport à un axe longitudinal de poignée (11) de la poignée (6) et/ou est disposé à distance dans la direction de l'axe longitudinal de poignée (11) de la poignée (6) et/ou d'une section de préhension de la poignée (6).

3. Appareil selon la revendication 1 ou 2, dans lequel le capteur d'empreinte digitale (5) est logé de manière à pouvoir être déplacé en translation par rapport à la poignée (6).

4. Appareil selon l'une des revendications 1 à 3, dans lequel le capteur d'empreinte digitale (5) peut être basculé autour d'un axe de basculement (14) qui s'étend approximativement perpendiculairement à une surface d'appui (21) du capteur d'empreinte digitale (5) et/ou approximativement perpendiculairement à un côté de boîtier adjacent au capteur d'empreinte digitale (5), et/ou autour d'un axe de basculement vertical (15) et/ou autour d'un axe de basculement horizontal (16) qui s'étend approximativement parallèlement à la surface d'appui du capteur d'empreinte digitale (5).

5. Appareil selon l'une des revendications 1 à 4, dans lequel le capteur d'empreinte digitale (5) peut être amené avec l'axe principal (13) du capteur d'empreinte digitale (5) dans une orientation inclinée à angle aigu par rapport à l'axe longitudinal de poignée (11).

6. Appareil selon la revendication 5, dans lequel le capteur d'empreinte digitale (5) peut être amené avec son axe principal (13) dans une orientation basculée à angle aigu sur deux axes par rapport à la poignée (6) et/ou dans une orientation inclinée angulaire par rapport à la poignée (6).

7. Appareil selon l'une des revendications 1 à 6, dans lequel la poignée (6) est orientée horizontalement et le capteur d'empreinte digitale (5) est disposé en dessous de la poignée (6).

8. Appareil selon l'une des revendications 1 à 7, dans lequel le capteur d'empreinte digitale (5) possède une surface d'appui (21) orientée verticalement.

9. Appareil selon l'une des revendications 1 à 8, dans lequel une surface d'appui du capteur d'empreinte digitale (5) se trouve dans un plan ou épouse un plan, lequel plan est incliné à un angle aigu par rapport à l'axe longitudinal de poignée (11).

10. Appareil selon l'une des revendications 1 à 9, dans lequel la poignée (6) est logée mobile en va-et-vient entre les deux positions de travail, et les deux positions de travail sont disposées symétriquement par rapport à un plan de symétrie (24) et/ou un axe de symétrie passant par le capteur d'empreinte digitale (5).

11. Appareil selon l'une des revendications 1 à 10, dans lequel la poignée (6) est logée mobile entre au moins l'une des deux positions de travail et une position de stationnement et/ou de non-fonctionnement.

12. Appareil selon l'une des revendications 1 à 11, dans lequel la poignée (6) est logée pivotante autour d'au moins un axe de pivotement (21), lequel axe de pivotement (21) s'étend de préférence sur une section d'extrémité de la poignée (6) perpendiculairement à la direction longitudinale de la poignée (6).

13. Appareil selon l'une des revendications 1 à 12, dans lequel la poignée (6) est formée de plusieurs éléments et comprend des parties de poignée dont la position peut être modifiée les unes par rapport aux autres, le capteur d'empreinte digitale (5) étant monté sur l'une des parties de poignée (6b).

14. Appareil selon la revendication 13, dans lequel la poignée (6) présente un élément de poignée (6a) pivotant sur plusieurs axes, qui peut pivoter par rapport à au moins un élément de support (6b) de la poignée (6) autour d'un axe de pivotement (21), lequel élément de support (6b) est lui-même logé pivotant autour d'un axe de pivotement (23) par rapport à la section de boîtier d'appareil (4).

15. Appareil selon l'une des revendications 1 à 14, dans lequel l'appareil est formé comme un appareil de commande séparé d'un appareil principal, lequel appareil de commande possède une interface pour la connexion avec l'appareil principal.
